# EUROPÄISCHE PATENTSCHRIFT

(11) **EP 4 209 405 B1**
(45) Veröffentlichungstag und Bekanntmachung des Hinweises auf die Patenterteilung: **18.03.2026**
(21) Anmeldenummer: 22211025.6
(22) Anmeldetag: 02.12.2022
(51) Int. Cl.: B62D 5/00, H02K 11/21, H02K 7/116, B62D 15/02

(54) **STEER-BY-WIRE-LENKSYSTEM FÜR EIN KRAFTFAHRZEUG**
STEER-BY-WIRE STEERING SYSTEM FOR A MOTOR VEHICLE
SYSTÈME DE DIRECTION À COMMANDE ÉLECTRIQUE POUR UN VÉHICULE AUTOMOBILE

(30) Priorität: 06.01.2022 DE 102022200090
(43) Veröffentlichungstag der Anmeldung: 12.07.2023
(73) Patentinhaber: VOLKSWAGEN AG, 38440 Wolfsburg (DE)
(72) Erfinder: Traue, Mirko, 32479 Hille (DE); Schumann, Heiko, 38116 Braunschweig (DE); Knopp, Thomas, 38159 Vechelde (DE)

(56) Entgegenhaltungen:
- EP-A1- 3 907 473
- WO-A2-2020/104593
- DE-A1- 102014 014 391
- DE-A1- 102018 213 112
- DE-A1- 102019 218 924
- US-A1- 2017 194 841

## Beschreibung

Die Erfindung betrifft ein Steer-by-Wire-Lenksystem für ein Kraftfahrzeug nach den Oberbegriffen der unabhängigen Ansprüche 1 und 2.

Steer-by-wire Lenksysteme erfreuen sich bei Kraftfahrzeugen zunehmender Beliebtheit. Dies liegt insbesondere auch daran, dass die Bestrebungen hinsichtlich des autonomen Fahrens, welches sich mit Steer-by-wire-Lenksystemen naturgemäß besser realisieren lässt als mit konventionellen Lenksystemen, ein Thema von zunehmender Bedeutung sind. Darüber hinaus bieten Steer-by-wire-Lenksysteme den Vorteil, dass die Reaktionen des Lenksystems auf die Bewegungen des Lenkrads vergleichsweise flexibel gehandhabt werden können. Dadurch ist es beispielsweise möglich, dass die Lenkung abhängig vom Fahrzustand des Fahrzeugs unterschiedlich auf die Lenkbewegung des Lenkrades reagiert, beispielsweise in Abhängigkeit davon, ob in Schrittgeschwindigkeit eine Parklücke angesteuert oder das Fahrzeug mit hoher Geschwindigkeit auf einer Autobahn bewegt wird.

Lenksysteme der in Rede stehenden Art weisen einen Elektromotor zum Bewirken der Lenkbewegung des Lenksystems und ein Lenkgestänge zur Übertragung der Lenkbewegung in Richtung der Räder auf. Regelmäßig ist das Lenkgestänge an Achsschenkeln, an denen die Räder aufgenommen sind, angelenkt.

Der Elektromotor ist mit dem Lenkgestänge über ein Lenkgetriebe mechanisch gekoppelt. Hierbei ist die mechanische Kopplung über das Lenkgetriebe derart ausgebildet, dass eine Lenkbewegung des Lenksystems über den gesamten möglichen Lenkwinkelbereich des Lenksystems eine Mehrzahl Umdrehungen der Motorwelle erfordert. Typischerweise ist für eine Lenkbewegung über den gesamten Lenkwinkelbereich einer Anzahl von 70 - 90 Motorumdrehungen notwendig.

Für die Realisierung eines Steer-by-wire-Lenksystems ist es insbesondere in steuerungstechnischer Hinsicht, insbesondere für die Regelung der Position des Lenksystems, wichtig, den aktuellen Lenkwinkel sensorisch erfassen zu können. Mit anderen Worten, die Steuerung des Lenksystems muss in jedem Moment wissen, wie weit die Räder in die eine oder andere Richtung eingeschlagen sind.

Hierfür sind nach dem Stand der Technik eine Reihe Möglichkeiten bekannt. So können beispielsweise Sensoren die Position des Lenkgestänges erfassen. Die hierfür üblicherweise verwendeten Winkelsensoren messen jedoch keine absoluten Werte, sondern nur Winkeländerungen. Dies hat zur Folge, dass beim Wegfall der Energieversorgung der Sensoren diese ihre Position "verlieren". Entsprechend müssen Maßnahmen getroffen werden, um beispielsweise die Sensoren bei jedem Start des Fahrzeugs im Hinblick auf den aktuellen absoluten Lenkwinkel zu kalibrieren.

Ebenfalls nachteilig an den Winkelsensoren ist, dass diese die Anordnung entsprechender elektronischer Sensoren im Bereich des Lenkgestänges erfordern. Damit gehen Maßnahmen wie beispielsweise die Anbindung über entsprechende Kabelstränge einher, die ebenfalls im Bereich des Lenkgestänges verlegt werden müssen und so das ganze Lenksystem anfällig, insbesondere gegen Umwelteinflüsse, machen.

Aus der WO 2020/104593 A2 ist ein Lenkwinkelsensor bekannt, der mittels eines mehrpoligen Magnetrings und einer Mehrzahl Sensoren arbeitet. Er kann mit einer Lenkwelle verbunden werden und deren absolute Positionen erfassen. Ein derartiger Sensor würde mit der Erfassung des Lenkwinkels an einem Elektromotor eines Steer-by-wire-Lenksystems ebenso aufgrund der hohen Anzahl der Motorumdrehungen zu dem Winkelverhältnis überfordert sein, wie die an Elektromotoren oftmals für die Motorregelung vorhandenen Drehwinkelsensoren.

Wünschenswert wäre daher eine Möglichkeit der Erfassung des Lenkwinkels, die auf derartige Verkabelungen verzichtet. So weisen beispielsweise Elektromotoren typischerweise Drehwinkelgeber auf, die zur Regelung des Elektromotors dienen. Aufgrund der hohen Anzahl von Umdrehungen, die mit einer Lenkbewegung einhergeht, wäre die Verwendung dieser Drehwinkelgeber, um aus der Position der Motorwelle auf den Lenkwinkel zurück zu schließen, jedoch problematisch. Einer Position des Drehwinkels an der Motorwelle können bei einem typischen Lenksystem 70 - 90 mögliche Lenkwinkel entsprechen. Verliert ein derartiger Drehgeber seine gegebenenfalls durch das Aufsummieren voller Umdrehungen bekannten Lenkwinkel, beispielsweise durch einen Ausfall der Hilfsenergie, ist die Zuordnung daher ebenfalls nicht mehr eindeutig.

Aus der gattungsgemäßen DE 10 2018 213 112 A1 ist eine Stellvorrichtung, die in Kraftfahrzeuglenkvorrichtungen verwendet werden kann, bekannt. Die Stellvorrichtung weist einen Rotorlagesensor zur Ermittlung einer Rotorposition des Rotors sowie einen Multiturnsensor zum Zählen der Anzahl der Umdrehungen des Rotors auf.

Die EP 3 907 473 A1 zeigt eine Winkelmessvorrichtung für Single- und Multiturnmessung. Dabei ist ein Feldelement um eine erste Drehachse drehbar gelagert, welche wiederum um eine zweite Drehachse, die zur ersten Drehachse versetzt verläuft, drehbar gelagert ist. Ein Sensor Array ist dazu ausgebildet, die Position des Feldelements in der Rotationsebene und seine Ausrichtung in Bezug auf seine Nord-Süd-Pol-Ausrichtung zu bestimmen, in dem das vom Feldelement erzeugte Magnetfeld gemessen wird.

Aufgabe der vorliegenden Erfindung ist es daher, ein Lenksystem der eingangs genannten Art aufzuzeigen, welches eine zuverlässige und gegenüber Umwelteinflüssen unempfindliche Ermittlung des Lenkwinkels ermöglicht.

Die Aufgabe wird gelöst durch ein Lenksystem mit den Merkmalen des Anspruchs 1, die Merkmale der abhängigen Ansprüche betreffen vorteilhafter Ausführungsformen.

Das Steer-by-wire-Lenksystem für ein Kraftfahrzeug weist einen Elektromotor zum Bewirken der Lenkbewegung des Lenksystems und ein Lenkgestänge zur Übertragung der Lenkbewegung in Richtung der Räder des Kraftfahrzeugs auf. Bei dem Lenkgestänge kann es sich beispielsweise um eine Anordnung aus einer quer zum Kraftfahrzeug verlaufenden Zahnstange und/oder Gewindestange handeln, die in Fahrzeugquerrichtung verschieblich und an ihren Enden, insbesondere mittels Spurstangen, mit Achsschenkeln des Kraftfahrzeugs verbunden sein kann.

Ferner weist das Steer-by-wire-Lenksystem einen Elektromotor auf. Dieser ist mit dem Lenkgestänge über ein Lenkgetriebe mechanisch gekoppelt. Bei dem Lenkgetriebe kann es sich beispielsweise um ein Lenkgetriebe handeln, bei dem mittels eines Zugmittels, wie beispielsweise eines Zahnriemens, die Bewegung der Motorwelle zunächst auf ein Rad übertragen wird. Dieses kann mit dem Lenkgestänge beispielsweise mittels eines Kugelgewindetriebs mechanisch gekoppelt sein. Auf diese Weise kann die Drehbewegung der Motorwelle in eine - zumindest überwiegend - translatorische Bewegung des Lenkgestänges umgewandelt werden.

Die Kopplung des Elektromotors mit dem Lenkgestänge über das Lenkgetriebe erfolgt dabei derart, dass eine Lenkbewegung des Lenksystems über den gesamten möglichen Winkelbereich des Lenksystems eine Mehrzahl Umdrehungen der Motorwelle erfordert. Insbesondere kann es sich hierbei um eine Anzahl von 70 - 90 Umdrehungen der Motorwelle für eine Lenkbewegung über den gesamten möglichen Lenkwinkelbereich des Lenksystems handeln.

Das Lenksystem weist weiterhin eine Sensoranordnung zur Erfassung der Bewegung der Motorwelle mit einem Sensor und einem durch den Sensor erfassbaren Target auf. Bei dem Sensor kann es sich um einen insbesondere um einen magnetoresistiven Sensor und/oder einen induktiven Sensor handeln. Entsprechend kann es sich bei dem Target um einen Magneten und/oder ein Target aus einem elektrisch leitfähigen Material handeln. Alternativ und/oder ergänzend kann es sich beispielsweise um einen optischen Sensor handeln.

Die Erfindung sieht insbesondere vor, dass die Sensoranordnung mit der Motorwelle über ein Getriebe derart gekoppelt ist, dass die Motorwelle eine Relativbewegung zwischen dem Sensor und dem Target bewirkt, die eine eindeutige Zuordnung zwischen der Relativposition des Targets zu dem Sensor und dem Lenkwinkel des Lenksystems ermöglicht. Die eindeutige Zuordnung wird hierbei insbesondere über den gesamten möglichen Lenkwinkelbereich des Lenksystems oder mit anderen Worten über den gesamten Lenkhub des Lenksystems ermöglicht.

Die Kopplung der Sensoranordnung mit der Motorwelle über ein Getriebe bewirkt, dass die Relativbewegung zwischen Target und Sensor mit einer wesentlich geringeren Geschwindigkeit, insbesondere mit einer wesentlich geringeren Winkelgeschwindigkeit, erfolgt, als die Bewegung der Motorwelle. Entsprechend reduziert sich der Weg bzw. der überstrichene Winkel der Bewegung durch das Getriebe. Auf diese Weise wird es möglich, mehrdeutige Relativpositionen von Target und Sensor zu vermeiden und so die Relativposition des Targets zu dem Sensor dem Lenkwinkel des Lenksystems eindeutig zuzuordnen.

Insbesondere können der Elektromotor, die Sensoranordnung und das Getriebe eine in einem gemeinsamen Gehäuse angeordneten Antriebseinheit bilden. Auf diese Weise lässt sich das für den Elektromotor ohnehin erforderliche Gehäuse nutzen, um die Sensoranordnung sowie das Getriebe vor Umwelteinflüssen geschützt anzuordnen. Dadurch ergibt sich insgesamt eine kompakte und kostengünstige Bauweise.

Das Lenksystem kann eine Auswertungseinrichtung zur Ermittlung des Lenkwinkels aus den Messergebnissen der Sensoranordnung aufweisen. Die Auswertungseinrichtung kann insbesondere ebenfalls mit Elektromotor, Sensoranordnung und Getriebe in dem gemeinsamen Gehäuse angeordnet sein. Hierdurch ergibt sich eine kompakte Anordnung, bei der freiliegende Leitungen in höchstem Maße vermieden werden.

Das Lenksystem kann insbesondere keine mechanische Verbindung zur Übertragung der Lenkbewegung zwischen Lenkrad und Lenkgestänge aufweisen. Bei derartigen "reinen" Steer-by-wire-Lenksystemen besteht keinerlei mechanische Kopplung mehr zwischen dem Lenkrad und dem Lenkgestänge. Von daher ist gerade bei derartigen Lenksystemen die genaue Kenntnis des absoluten Lenkwinkels zu jedem Zeitpunkt für die Steuerung des Lenksystems wesentlich.

Das Getriebe kann relativ zum Rotor des Elektromotors auf der Seite des B-Lagers der Lagerung des Elektromotors angeordnet sein. Bei dem B-Lager eines Elektromotors handelt es sich um das Lager, das dem Abtrieb, also insbesondere der Verbindung des Elektromotors mit dem Lenkgetriebe, bezogen auf den Rotor des Elektromotors gegenüberliegt bzw. von dem Abtrieb weg weist. Auf dieser Seite des Rotors lässt sich das Getriebe konstruktiv günstig anordnen.

Insbesondere ist das Getriebe zwischen dem Rotor und dem B-Lager des Elektromotors angeordnet. Die Anordnung hat den Vorteil, dass eine Konstruktion, bei der Getriebe, Sensoranordnung und Elektromotor von einem gemeinsamen Gehäuse umschlossen werden, besonders günstig und kompakt realisiert werden kann.

Bei dem Getriebe kann es sich um ein mehrstufiges Getriebe handeln. Ein mehrstufiges Getriebe bietet den Vorteil, dass mit ihm hohe Übersetzungsverhältnisse realisiert werden können. Darüber hinaus kann eine mehrstufige Anordnung eine kompakte Bauweise bei einem vorgegebenen Übersetzungsverhältnis ermöglichen.

Bei dem Getriebe handeltes sich um ein Zykloidgetriebe oder ein Planetengetriebe. Zykloidgetriebe und Planetengetriebe ermöglichen es, vergleichsweise hohe Übersetzungsverhältnisse auf kleinem Raum zu realisieren. Bei dem Planetengetriebe handelt es sich insbesondere um ein Doppelplanetengetriebe. Bei einem Doppelplanetengetriebe sind das Hohlrad und das Sonnenrad durch Paare von miteinander kämmenden Planetenrädern verbunden. Dadurch können noch größere Übersetzungsverhältnisse realisiert werden.

In diesem Zusammenhang ist es vorteilhaft, wenn das Hohlrad des Planetengetriebes bzw. der jeweiligen Stufe des Planetengetriebes feststehend, beispielsweise mit dem Gehäuse verbunden, ausgeführt ist. Das Sonnenrad des Planetengetriebes bzw. der ersten Stufe des Planetengetriebes ist insbesondere auf der Motorwelle angeordnet und insbesondere mit dieser drehfest verbunden.

Bei dem Planetengetriebe handelt es sich um ein mehrstufiges Planetengetriebe. Ein mehrstufiges Planetengetriebe kann beispielsweise dadurch realisiert sein, dass der Planetenträger einer Getriebestufe hinsichtlich seiner Drehbewegung mit dem Sonnenrad der jeweils nächsten Getriebestufe gekoppelt ist. Insbesondere wenn in einem derartigen Fall das Sonnenrad der ersten Getriebestufe mit der Motorwelle dreht, können die Sonnenräder weiterer Getriebestufen relativ zur Motorwelle drehbar auf und/oder um die Motorwelle angeordnet sein.

Das Getriebe kann insbesondere die Motorwelle umgebend angeordnet sein. Insbesondere wenn das Getriebe die Motorwelle umgebend angeordnet ist, kann ein Bestandteil der Sensoranordnung durch das Getriebe um die Welle herum bewegt werden. Bei diesem Bestandteil der Sensoranordnung handelt es sich insbesondere um das Target. Das Target um die Welle herum zu bewegen hat den Vorteil, dass das Target im Gegensatz zu dem Sensor üblicherweise nicht mittels Leitungen mit einer Auswertungseinrichtung verbunden sein muss.

Eine derartige Anordnung hat den Vorteil, dass das Target auf einer vergleichsweise langen Bewegungsbahn bewegt werden kann, die Bewegungsbahn des Targets dennoch eine kompakte Anordnung der Sensoranordnung im Gehäuse erlaubt. Dabei ist das Lenksystem, insbesondere das Getriebe, derart gestaltet, dass der Bestandteil der Sensoranordnung um einen Winkelbereich, der kleiner ist als 360°, um die Welle herum bewegt werden kann. Dadurch ergibt sich die Möglichkeit einer eindeutigen Zuordnung jedes Punktes auf der Bahn zu einem möglichen Lenkwinkel. Die Bewegungsbahn ist insbesondere eine Kreisbahn.

Bei dem Sensor kann es sich um einen Sensorring handeln. Der Sensorring kann dazu ausgebildet sein, die Position des Targets entlang des Ringes zu erkennen. Eine Verwendung eines derartigen ringförmigen Sensors bietet den Vorteil, dass insbesondere ein Target, welches auf einer Kreisbahn um die Welle herum bewegt werden kann, mit einem derartigen Sensor an jeder seiner Positionen erkannt werden kann.

Das Lenksystem kann eine weitere Sensoranordnung aufweisen. Das Lenksystem, insbesondere die Auswertungseinrichtung, kann dazu ausgebildet sein, zur Verbesserung der Auflösung bei der Ermittlung des Lenkwinkels die Messergebnisse der Sensoranordnung und der weiteren Sensoranordnung in Abhängigkeit voneinander auszuwerten.

Durch die Verwendung von zwei Sensoranordnungen können Messergebnisse zweier Sensoren genutzt werden, um den Lenkwinkel zu errechnen. Die über das Getriebe mit der Motorwelle verbundene Sensoranordnung weist aufgrund der vergleichsweise hohen Übersetzung, die für eine eindeutige Zuordnung benötigt wird, nur vergleichsweise geringe Relativbewegungen des Targets zum Sensor bei kleinen Lenkbewegungen auf. Daher kann eine weitere Sensoranordnung mit einem weiteren Sensor und einem weiteren Target, bei der die Relativbewegung zwischen weiterem Sensor und weiterem Target durch die Motorwelle direkt oder vermittelt durch eine geringere Übersetzung bewirkt wird, als im Fall Sensoranordnung. Mit anderen Worten verhält sich die weitere Sensoranordnung zu der Sensoranordnung wie der Minutenzeiger einer Uhr zum Stundenzeiger. Dies bedeutet insbesondere, dass bei der weiteren Sensoranordnung auf die Eindeutigkeit einer Zuordnung der Relativposition von Target und Sensor zu einem bestimmten Lenkwinkel verzichtet werden kann.

In diesem Zusammenhang kann es sich bei der weiteren Sensoranordnung insbesondere um eine Rotorlage-Sensoranordnung zur Messung der Rotorlage des Elektromotors handeln. Derartige Rotorlage-Sensoranordnungen sind häufig ohnehin Bestandteil von Elektromotoren. Das weitere Target ist bei derartigen Rotorlage-Sensoranordnungen in vorteilhafter Weise direkt an der Motorwelle befestigt. Durch die zusätzliche Nutzung derartiger Rotorlage-Sensoranordnungen bei der Ermittlung des Lenkwinkels kann die Auflösung in kostengünstiger Weise wesentlich erhöht werden.

Alternativ und/oder ergänzend ist es beispielsweise möglich, dass die weitere Sensoranordnung im Hinblick auf die Relativposition des Targets zu dem Sensor mit einer Getriebestufe des Getriebes gekoppelt ist.

Weitere praktische Ausführungsformen der Erfindung sind nachfolgend im Zusammenhang mit den Zeichnungen beschrieben. Es zeigen:
- Fig. 1: eine schematische Prinzipskizze eines beispielhaften Lenksystems,

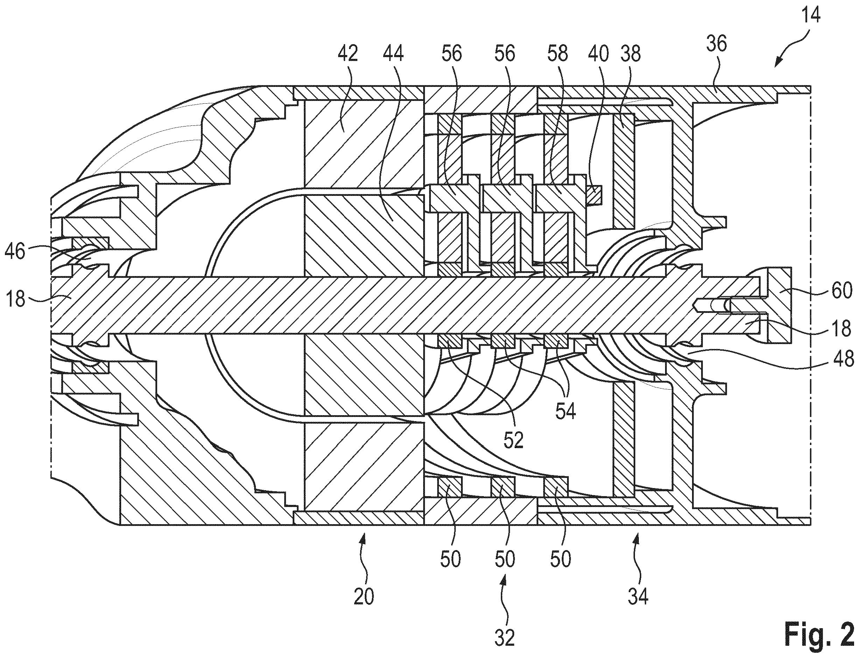

- Fig. 2: eine perspektivische Schnittdarstellung einer beispielhaften Antriebseinheit aus Elektromotor, Getriebe und Sensoranordnung eines beispielhaften Lenksystems,

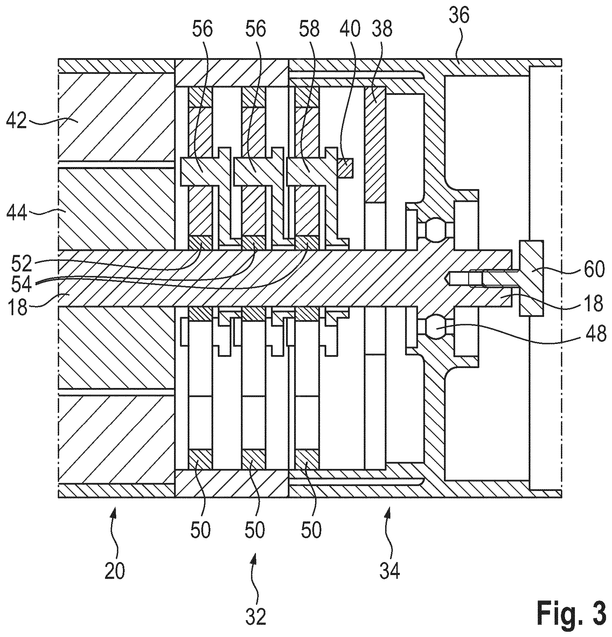

- Fig. 3: eine Längsschnittdarstellung eines Teils der Antriebseinheit aus Figur zwei.

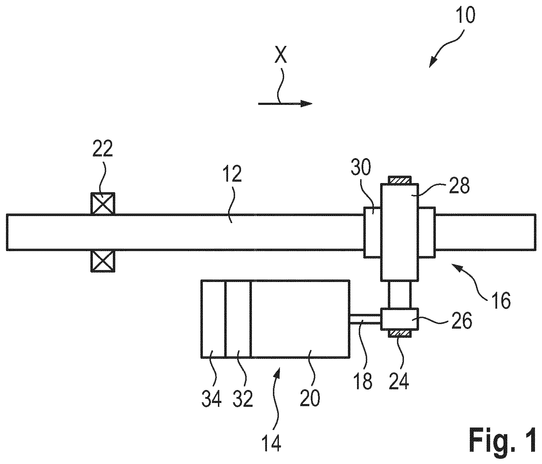

Figur 1 zeigt eine schematische Darstellung eines beispielhaften Steer-by-wire-Lenksystems 10. Zur Bewegung des Lenkgestänges 12 des beispielhaften Lenksystems 10 in Fahrzeugquerrichtung X kann wie im gezeigten Beispiel eine Antriebseinheit 14 vorgesehen sein. Die Antriebseinheit 14 ist durch das Lenkgetriebe 16 derart mit dem Lenkgestänge 12 gekoppelt, dass eine Lenkbewegung des Lenksystems 10 über den gesamten möglichen Lenkwinkelbereich des Lenksystems 10 eine Mehrzahl Umdrehungen der Motorwelle 18 eines Elektromotors 20 der Antriebseinheit 14 erfordert.

Wie im gezeigten Beispiel kann das Lenksystem 10 derart ausgebildet sein, dass das Lenksystem 10 keine mechanische Verbindung zu Übertragung der Lenkbewegung zwischen dem, nicht dargestellten, Lenkrad und Lenkgestänge 12 aufweist. Das Lenkgestänge 12 ist lediglich mittels einer geeigneten Lagerung 22 insbesondere entlang der Fahrzeugquerrichtung X beweglich gelagert.

Wie im gezeigten Beispiel kann das Lenkgetriebe 16 beispielhaft einen Riemen 24 aufweisen, der die Bewegung der Motorwelle 18 von einem auf der Motorwelle 18 angeordneten Riemenrad 26 auf ein Riemenrad 28 überträgt, dass die Lenkbewegung, beispielsweise mittels eines Kugelgewindetriebs 30, auf das Lenkgestänge 12 überträgt.

Die Antriebseinheit 14 kann wie im gezeigten Beispiel einen Elektromotor 20 zum Bewirken der Lenkbewegung, ein Getriebe 32 und eine Sensoranordnung 34 aufweisen. Diese können wie im gezeigten Beispiel in einem gemeinsamen Gehäuse 36 angeordnet sein.

Die Sensoranordnung 34 ist mit der Motorwelle 18 über das Getriebe 32 derart gekoppelt, dass die Motorwelle 18 eine Relativbewegung zwischen dem Sensor 38 und dem Target 40 der Sensoranordnung 34 bewirkt. Wie im gezeigten Beispiel können der Stator 42 und der Rotor 44 des Elektromotors 20, das Getriebe 32 und die Sensoranordnung 34 zwischen dem A-Lager 46 und dem B-Lager 48 des Elektromotors angeordnet sein. In vorteilhafter Weise können hierbei wie im gezeigten Beispiel das Getriebe 32 und die Sensoranordnung 34 zwischen dem B-Lager 48 und dem Rotor 44 angeordnet sein. Dabei kann sich insbesondere wie beispielhaft dargestellt das Getriebe 32 zwischen der Sensoranordnung 34 und dem Rotor 44 befinden.

Bei dem Getriebe 32 handelt es sich um ein mehrstufiges Planetengetriebe. Die Hohlräder 50 der, im gezeigten Beispiel drei, Getriebestufen können feststehend relativ zu dem Gehäuse 36 der Antriebseinheit 14 angeordnet sein. Wie im gezeigten Beispiel kann das Sonnenrad 52 der ersten Stufe des Getriebes 32 drehfest mit der Motorwelle 18 verbunden sein. Die Sonnenräder 54 der weiteren Getriebestufen sind insbesondere wie im gezeigten Beispiel drehfest mit den Planetenträgern 56 der jeweils vorangehenden Getriebestufe verbunden. Relativ zur Motorwelle 18 sind die Sonnenräder 54 der weiteren Getriebestufen vorzugsweise um die Motorwelle 18 drehbar. Das Target 40 ist an dem Planetenträger 58 der letzten Getriebestufe befestigt.

Das Lenksystem 10 ist insbesondere derart gestaltet, dass das Target 40 bei einer Lenkbewegung über den vollen Lenkwinkelbereich des Lenksystems 10 eine Kreisbewegung beschreibt, bei der der überstrichene Winkelbereich weniger als 360° beträgt, d. h. der durch die Bewegung des Targets 40 beschriebene Kreisbogen ist kleiner als ein Vollkreis. Dadurch kann jeder Position des Targets 40 ein Lenkwinkel eindeutig zugeordnet werden.

Bei dem Sensor 38 kann es sich insbesondere um einen Sensorring handeln, wie dies im gezeigten Beispiel der Fall ist. Zur Verbesserung der Auflösung kann eine, nicht dargestellte, Auswertungseinrichtung zur Ermittlung des Lenkwinkels zudem die Messergebnisse der Sensoranordnung 34 in Abhängigkeit mit Messergebnissen einer weiteren Sensoranordnung auswerten, von der im gezeigten Beispiel beispielhaft ein mit der Motorwelle 18 drehfest verbundenes weiteres Target 60 dargestellt ist. Das weitere Target 60 ist insbesondere wie dargestellt Bestandteil einer Rotorlage-Sensoranordnung.
Die Erfindung kann im Rahmen der Ansprüche und unter Berücksichtigung der Kenntnisse des zuständigen Fachmanns variiert werden.

### Bezugszeichenliste

- 10: Steer-by-wire-Lenksystem
- 12: Lenkgestänge
- 14: Antriebseinheit
- 16: Lenkgetriebe
- 18: Motorwelle
- 20: Elektromotor
- 22: Lagerung
- 24: Riemen
- 26: Riemenrad
- 28: Riemenrad
- 30: Kugelgewindetrieb
- 32: Getriebe
- 34: Sensoranordnung
- 36: Gehäuse
- 38: Sensor
- 40: Target
- 42: Stator
- 44: Rotor
- 46: A-Lager
- 48: B-Lager
- 50: Hohlräder
- 52: Sonnenrad
- 54: Sonnenrad
- 56: Planetenträger
- 58: Planetenträger
- 60: weiteres Target

## Patentansprüche

1. Steer-by-wire Lenksystem (10) für ein Kraftfahrzeug, mit einem Elektromotor (20) zum Bewirken der Lenkbewegung des Lenksystems (10) und einem Lenkgestänge (12) zur Übertragung der Lenkbewegung in Richtung der Räder des Kraftfahrzeugs, wobei der Elektromotor (20) mit dem Lenkgestänge (12) über ein Lenkgetriebe (16) derart mechanisch gekoppelt ist, dass eine Lenkbewegung des Lenksystems (10) über den gesamten möglichen Lenkwinkelbereich des Lenksystems (10) eine Mehrzahl Umdrehungen der Motorwelle (18) erfordert,
und einer Sensoranordnung (34) zur Erfassung der Bewegung der Motorwelle (18) mit einem Sensor (38) und einem durch den Sensor (38) erfassbaren Target (40),
**dadurch gekennzeichnet,**
**dass** die Sensoranordnung (34) mit der Motorwelle (18) über ein Getriebe (32) derart gekoppelt ist, dass die Motorwelle (18) eine Relativbewegung zwischen dem Sensor (38) und dem Target (40) bewirkt, die eine eindeutige Zuordnung zwischen der Relativposition des Targets (40) zu dem Sensor (38) und dem Lenkwinkel des Lenksystems (10), insbesondere über den gesamten möglichen Lenkwinkelbereich des Lenksystems (10), ermöglicht, wobei es sich bei dem Getriebe um ein Zykloidgetriebe handelt.

2. Steer-by-wire Lenksystem (10) für ein Kraftfahrzeug, mit einem Elektromotor (20) zum Bewirken der Lenkbewegung des Lenksystems (10) und einem Lenkgestänge (12) zur Übertragung der Lenkbewegung in Richtung der Räder des Kraftfahrzeugs, wobei der Elektromotor (20) mit dem Lenkgestänge (12) über ein Lenkgetriebe (16) derart mechanisch gekoppelt ist, dass eine Lenkbewegung des Lenksystems (10) über den gesamten möglichen Lenkwinkelbereich des Lenksystems (10) eine Mehrzahl Umdrehungen der Motorwelle (18) erfordert,
und einer Sensoranordnung (34) zur Erfassung der Bewegung der Motorwelle (18) mit einem Sensor (38) und einem durch den Sensor (38) erfassbaren Target (40),
**dadurch gekennzeichnet,**
**dass** die Sensoranordnung (34) mit der Motorwelle (18) über ein Getriebe (32) derart gekoppelt ist, dass die Motorwelle (18) eine Relativbewegung zwischen dem Sensor (38) und dem Target (40) bewirkt, die eine eindeutige Zuordnung zwischen der Relativposition des Targets (40) zu dem Sensor (38) und dem Lenkwinkel des Lenksystems (10), insbesondere über den gesamten möglichen Lenkwinkelbereich des Lenksystems (10), ermöglicht, wobei es sich bei dem Getriebe um ein mehrstufiges Planetengetriebe handelt, wobei das Target (40) an dem Planetenträger (58) der letzten Getriebestufe befestigt ist.

3. Lenksystem (10) nach Anspruch 1 oder 2, **dadurch gekennzeichnet, dass** der Elektromotor (20), die Sensoranordnung (34) und das Getriebe (32) in einem gemeinsamen Gehäuse (36) angeordnet sind.

4. Lenksystem (10) nach einem der vorigen Ansprüche, **dadurch gekennzeichnet, dass** das Lenksystem (10) keine mechanische Verbindung zur Übertragung der Lenkbewegung zwischen Lenkrad und Lenkgestänge (12) aufweist.

5. Lenksystem (10) nach einem der vorigen Ansprüche, **dadurch gekennzeichnet, dass** das Getriebe (32) relativ zum Rotor (44) des Elektromotors (20) auf der Seite des B-Lagers (48) der Lagerung des Elektromotors (20), insbesondere zwischen dem Rotor (44) und dem B-Lager (48), angeordnet ist.

6. Lenksystem (10) nach einem der vorigen Ansprüche 1 oder 3 bis 5, **dadurch gekennzeichnet, dass** das Getriebe (32) ein mehrstufiges Getriebe ist.

7. Lenksystem (10) nach einem der Ansprüche 2 bis 6, **dadurch gekennzeichnet, dass** es sich bei dem Getriebe (32) um ein Doppelplanetengetriebe handelt.

8. Lenksystem (10) nach einem der vorigen Ansprüche, **dadurch gekennzeichnet, dass** das Getriebe (32) die Motorwelle (18) umgebend angeordnet ist und ein Bestandteil der Sensoranordnung (34), insbesondere das Target (40), durch das Getriebe (32) um die Welle (18) herumbewegt wird.

9. Lenksystem (10) nach einem der vorigen Ansprüche, **dadurch gekennzeichnet, dass** es sich bei dem Sensor (38) um einen Sensorring handelt, der dazu ausgebildet ist, die Position des Targets (40) entlang des Ringes zu erkennen.

10. Lenksystem (10) nach einem der vorigen Ansprüche, **dadurch gekennzeichnet, dass** das Lenksystem (10) eine Auswertungseinrichtung zur Ermittlung des Lenkwinkels aus den Messergebnissen der Sensoranordnung (34) aufweist, wobei das Lenksystem (10) eine weitere Sensoranordnung aufweist und das Lenksystem (10), insbesondere die Auswertungseinrichtung, dazu ausgebildet ist, zur Verbesserung der Auflösung bei der Ermittlung des Lenkwinkels die Messergebnisse der Sensoranordnung (34) und der weiteren Sensoranordnung in Abhängigkeit voneinander auszuwerten.

11. Lenksystem (10) nach einem der vorigen Ansprüche, **dadurch gekennzeichnet, dass** es sich bei der weiteren Sensoranordnung um eine Rotorlage-Sensoranordnung zur Messung der Rotorlage des Elektromotors (20) handelt.

## Claims

1. Steer-by-wire steering system (10) for a motor vehicle, comprising an electric motor (20) for effecting the steering movement of the steering system (10), and comprising a steering linkage (12) for transmitting the steering movement toward the wheels of the motor vehicle, the electric motor (20) being mechanically coupled to the steering linkage (12) via a steering gear (16) in such a way that a steering movement of the steering system (10) over the entire possible steering angle range of the steering system (10) requires a plurality of rotations of the motor shaft (18),
and comprising a sensor arrangement (34) for detecting the movement of the motor shaft (18) with a sensor (38) and a target (40) detectable by the sensor (38),
**characterized**
**in that** the sensor arrangement (34) is coupled to the motor shaft (18) via a transmission (32) in such a way that the motor shaft (18) effects a relative movement between the sensor (38) and the target (40), which movement allows a unique assignment between the relative position of the target (40) to the sensor (38) and the steering angle of the steering system (10), in particular over the entire possible steering angle range of the steering system (10), the transmission being a cycloidal gear.

2. Steer-by-wire steering system (10) for a motor vehicle, comprising an electric motor (20) for effecting the steering movement of the steering system (10), and comprising a steering linkage (12) for transmitting the steering movement toward the wheels of the motor vehicle, the electric motor (20) being mechanically coupled to the steering linkage (12) via a steering gear (16) in such a way that a steering movement of the steering system (10) over the entire possible steering angle range of the steering system (10) requires a plurality of rotations of the motor shaft (18),
and comprising a sensor arrangement (34) for detecting the movement of the motor shaft (18) with a sensor (38) and a target (40) detectable by the sensor (38),
**characterized**
**in that** the sensor arrangement (34) is coupled to the motor shaft (18) via a transmission (32) in such a way that the motor shaft (18) effects a relative movement between the sensor (38) and the target (40), which movement allows a unique assignment between the relative position of the target (40) to the sensor (38) and the steering angle of the steering system (10), in particular over the entire possible steering angle range of the steering system (10), the transmission being a multi-stage planetary gear train, the target (40) being fastened to the planet carrier (58) of the final gear train stage.

3. Steering system (10) according to claim 1 or 2, **characterized in that** the electric motor (20), the sensor arrangement (34) and the transmission (32) are arranged in a common housing (36).

4. Steering system (10) according to any of the preceding claims, **characterized in that** the steering system (10) does not have a mechanical connection for transmitting the steering movement between the steering wheel and the steering linkage (12).

5. Steering system (10) according to any of the preceding claims, **characterized in that** the transmission (32) is arranged on the side of the B-bearing (48) of the mounting of the electric motor (20) relative to the rotor (44) of the electric motor (20), in particular between the rotor (44) and the B-bearing (48).

6. Steering system (10) according to any of the preceding claims 1 or 3 to 5, **characterized in that** the transmission (32) is a multi-stage transmission.

7. Steering system (10) according to any of claims 2 to 6,
**characterized in that** the transmission (32) is a double planetary gear train.

8. Steering system (10) according to any of the preceding claims, **characterized in that** the transmission (32) is arranged surrounding the motor shaft (18) and a component of the sensor arrangement (34), in particular the target (40), is moved around the shaft (18) by the transmission (32).

9. Steering system (10) according to any of the preceding claims, **characterized in that** the sensor (38) is a sensor ring designed to identify the position of the target (40) along the ring.

10. Steering system (10) according to any of the preceding claims, **characterized in that** the steering system (10) has an evaluation device for determining the steering angle from the measurement results of the sensor arrangement (34), the steering system (10) having a further sensor arrangement and the steering system (10), in particular the evaluation device, being designed to evaluate the measurement results of the sensor arrangement (34) and the further sensor arrangement in relation to each other in order to improve the resolution in determining the steering angle.

11. Steering system (10) according to any of the preceding claims, **characterized in that** the further sensor arrangement is a rotor position sensor arrangement for measuring the rotor position of the electric motor (20).

## Revendications

1. Système de direction (10) à direction électrique pour un véhicule automobile, comportant un moteur électrique (20) permettant de provoquer le mouvement de direction du système de direction (10) et une tringlerie de direction (12) permettant de transmettre le mouvement de direction en direction des roues du véhicule automobile, dans lequel le moteur électrique (20) est accouplé mécaniquement à la tringlerie de direction (12) par l'intermédiaire d'un mécanisme de direction (16) de telle sorte qu'un mouvement de direction du système de direction (10) sur toute la plage d'angles de direction possible du système de direction (10) nécessite une pluralité de rotations de l'arbre moteur (18),
et un agencement à capteur (34) permettant de détecter le mouvement de l'arbre moteur (18) comportant un capteur (38) et une cible (40) pouvant être détectée par le capteur (38),
**caractérisé en ce**
**que** l'agencement à capteur (34) est accouplé à l'arbre moteur (18) par l'intermédiaire d'un engrenage (32) de telle sorte que l'arbre moteur (18) provoque un mouvement relatif entre le capteur (38) et la cible (40) qui permet une association univoque entre la position relative de la cible (40) par rapport au capteur (38) et l'angle de direction du système de direction (10), en particulier sur toute la plage d'angles de direction possible du système de direction (10), dans lequel l'engrenage est un engrenage cycloïdal.

2. Système de direction (10) à direction électrique pour un véhicule automobile, comportant un moteur électrique (20) permettant de provoquer le mouvement de direction du système de direction (10) et une tringlerie de direction (12) permettant de transmettre le mouvement de direction en direction des roues du véhicule automobile, dans lequel le moteur électrique (20) est accouplé mécaniquement à la tringlerie de direction (12) par l'intermédiaire d'un mécanisme de direction (16) de telle sorte qu'un mouvement de direction du système de direction (10) sur toute la plage d'angles de direction possible du système de direction (10) nécessite une pluralité de rotations de l'arbre moteur (18),
et un agencement à capteur (34) permettant de détecter le mouvement de l'arbre moteur (18) comportant un capteur (38) et une cible (40) pouvant être détectée par le capteur (38),
**caractérisé en ce**
**que** l'agencement à capteur (34) est accouplé à l'arbre moteur (18) par l'intermédiaire d'un engrenage (32) de telle sorte que l'arbre moteur (18) provoque un mouvement relatif entre le capteur (38) et la cible (40) qui permet une association univoque entre la position relative de la cible (40) par rapport au capteur (38) et l'angle de direction du système de direction (10), en particulier sur toute la plage d'angles de direction possible du système de direction (10), dans lequel l'engrenage est un engrenage planétaire à plusieurs étages, dans lequel la cible (40) est fixée sur le porte-satellites (58) du dernier étage d'engrenage.

3. Système de direction (10) selon la revendication 1 ou 2,
**caractérisé en ce que** le moteur électrique (20), l'agencement à capteur (34) et l'engrenage (32) sont disposés dans un boîtier (36) commun.

4. Système de direction (10) selon l'une des revendications précédentes, **caractérisé en ce que** le système de direction (10) ne présente pas de liaison mécanique pour la transmission du mouvement de direction entre le volant de direction et la tringlerie de direction (12).

5. Système de direction (10) selon l'une des revendications précédentes, **caractérisé en ce que** l'engrenage (32) est disposé par rapport au rotor (44) du moteur électrique (20) du côté du palier B (48) du montage du moteur électrique (20), en particulier entre le rotor (44) et le palier B (48).

6. Système de direction (10) selon l'une des revendications précédentes 1 ou 3 à 5, **caractérisé en ce que** l'engrenage (32) est un engrenage à plusieurs étages.

7. Système de direction (10) selon les revendications 2 à 6,
**caractérisé en ce que** l'engrenage (32) est un double engrenage planétaire.

8. Système de direction (10) selon l'une des revendications précédentes, **caractérisé en ce que** l'engrenage (32) est disposé de manière à entourer l'arbre moteur (18) et une partie intégrante de l'agencement à capteur (34), en particulier la cible (40), est déplacée autour de l'arbre (18) par l'engrenage (32).

9. Système de direction (10) selon l'une des revendications précédentes, **caractérisé en ce que** le capteur (38) est un anneau de détection configuré pour détecter la position de la cible (40) le long de l'anneau.

10. Système de direction (10) selon l'une des revendications précédentes, **caractérisé en ce que** le système de direction (10) présente un dispositif d'évaluation permettant de déterminer l'angle de direction à partir des résultats de mesure de l'agencement à capteur (34), dans lequel le système de direction (10) présente un autre agencement à capteur et le système de direction (10), en particulier le dispositif d'évaluation, est configuré pour évaluer les résultats de mesure de l'agencement à capteur (34) et de l'autre agencement à capteur en fonction les uns des autres pour améliorer la résolution lors de la détermination de l'angle de direction.

11. Système de direction (10) selon l'une des revendications précédentes, **caractérisé en ce que** l'autre agencement à capteur est un agencement à capteur de position de rotor permettant de mesurer la position de rotor du moteur électrique (20).
